# EUROPÄISCHE PATENTSCHRIFT

(11) **EP 0 599 375 B1**
(45) Veröffentlichungstag und Bekanntmachung des Hinweises auf die Patenterteilung: **03.03.1999**
(21) Anmeldenummer: 93203160.2
(22) Anmeldetag: 12.11.1993
(51) Int. Cl.: G02B 26/02, G02B 26/06, G02F 1/21, G02B 5/28, G01J 3/26, G02B 6/26

(54) **Lichtmodulator**
Light modulator
Modulateur de lumière

(30) Priorität: 20.11.1992 CH 3566/92
(43) Veröffentlichungstag der Anmeldung: 01.06.1994
(73) Patentinhaber: ASCOM TECH AG, 3018 Bern (CH)
(72) Erfinder: Vogel, Paul, Dr., CH-3612 Steffisburg (CH); Bättig, Rainer, CH-3012 Bern (CH)
(74) Vertreter: AMMANN PATENTANWAELTE AG BERN

(56) Entgegenhaltungen:
- EP-A- 0 480 231
- GB-A- 1 270 460
- US-A- 4 081 680
- PATENT ABSTRACTS OF JAPAN vol. 9, no. 314 (P-412)10. Dezember 1985 & JP-A-60 144 715 (FUJITSU KK)
- PATENT ABSTRACTS OF JAPAN vol. 14, no. 2 (E-868)8. Januar 1989 & JP-A-01 251 842 (NEC CORPORATION)
- IBM TECHNICAL DISCLOSURE BULLETIN. Bd. 33, Nr. 1A , 1. Juni 1990 , NEW YORK US Seiten 371 - 377 'optical microphone'
- TELECOMMUNICATIONS AND RADIO ENGINEERING Bd. 43, Nr. 5 , Mai 1988 , WASHINGTON US Seiten 32 - 37 DUBLENSKIY S.V. ET.AL. 'Fiber-optic microphones for optical communications systems'
- PATENT ABSTRACTS OF JAPAN vol. 12, no. 112 (P-687)9. April 1988 & JP-A-62 242 806 (OMRON TATEISI ELECTRONICS)

## Beschreibung

Die Erfindung betrifft einen Modulator zum Modulieren der Intensität eines Lichtstrahls entsprechend dem Oberbegriff von Anspruch 1.

Aus der Schrift DE 40 31 970 A1 ist ein optischer Reflexionsmodulator bekannt. Bei diesem trifft das aus dem stumpfen Ende einer Lichtleitfaser austretende Licht auf einen orthogonal zur Faser angeordneten Spiegel. Dieser Spiegel wirft das Licht in sich zurück, wobei in Art eines Fabry-Perot-Resonators eine stehende Welle zwischen dem spiegelnden Faserende und dem Spiegel auftritt, sofern deren Abstand dem Vielfachen einer halben Wellenlänge des verwendeten Lichts entspricht. Durch Verändern des genannten Abstandes, insbesondere durch Verschiebung des Spiegels, lässt sich der Fabry-Perot-Resonator verstimmen und damit die Lichtstärke verändern.

Der beschriebene Modulator ist im Aufbau relativ einfach und besitzt gute Modulationseigenschaften. Er ist jedoch vom absoluten Wert des Abstandes zwischen dem Faserende und dem Spiegel abhängig, der sich durch mancherlei Einflüsse verändert, z.B. in Abhängigkeit vom der Temperatur. Es muss daher ein Regler vorgesehen werden, der den "optischen Abstand" konstant hält.

Ausgehend von diesem Stand der Technik ist es die Aufgabe der Erfindung, einen Lichtmodulator anzugeben, der vergleichbare Modulationseigenschaften aufweist, jedoch unabhängig von der genannten Problematik einer konstant zu haltenden Länge ist.

Diese Aufgabe wird durch den kennzeichnenden Teil des Anspruchs 1 gelöst. Die abhängigen Ansprüche geben Ausgestaltungen der Erfindung an.

Die genannte Lösung zeichnet sich durch besondere Einfachheit aus und arbeitet sehr empfindlich. Sie bildet damit einen hervorragenden Modulator der Gattung der optischen Reflexionsmodulatoren mit beweglichen Spiegelflächen.

Im folgenden wird die Erfindung anhand von vier Figuren beispielsweise näher beschrieben. Es zeigen:
Fig. 1 - perspektivische, prinzipielle Ansicht eines ersten Modulators,
Fig. 2 - vergrösserte Detailansicht von Fig. 1,
Fig. 3 - Schnitt durch einen zweiten Modulator,
Fig. 4 - Ansicht eines dritten Modulators.

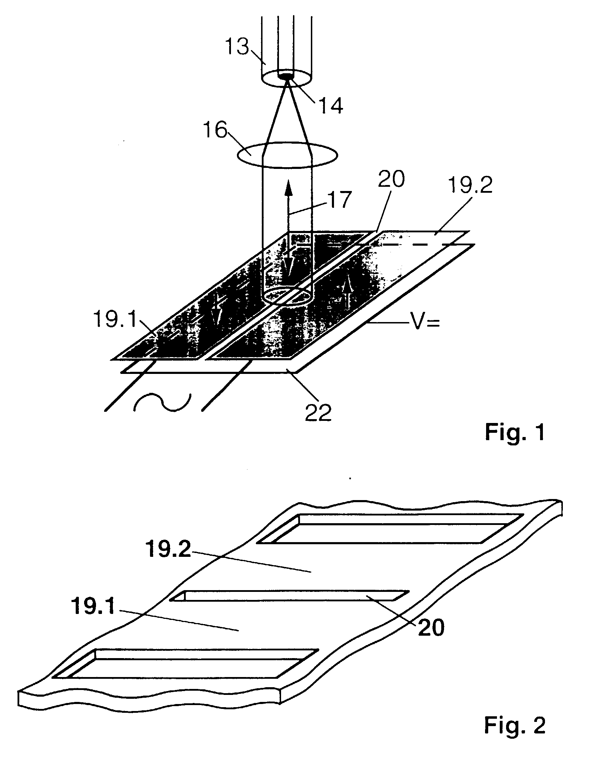

Fig. 1 zeigt eine prinzipielle, perspektivische Ansicht eines Modulators 11. Das Licht erreicht die Anordnung über eine Lichtleitfaser 13, z.B. eine Monomode-Glasfaser. Am Ende der Faser 13 tritt das Licht aus, weitet sich in bekannter Weise kegelförmig auf und wird durch eine Sammellinse 16, deren einer Brennpunkt an der Lichtaustrittstelle 14 liegt, parallelisiert. Der relativ breite, parallelisierte Lichtstrahl trifft nun so auf einen zweigeteilten Spiegel 19, der orthogonal zum Lichtstrahl angeordnet ist, dass jeder der Teilspiegel 19.1 und 19.2 etwa die gleiche Lichtmenge empfängt. Durch die Orthogonalität wird das ankommende Licht in sich selbst zurückgespiegelt, durch die Sammellinse 16 fokussiert und schliesslich wieder in die Lichtleitfaser 13 eingespeist. Dies ist durch den Doppelpfeil 17 angedeutet.

Die beiden Teilspiegel 19.1, 19.2 sind plan und liegen im Ruhezustand auf gleichem Niveau bzw. in der gleichen Ebene. Hierdurch besteht zwischen dem Licht, das von den beiden Teilspiegeln 19.1, 19.2 reflektiert wird, kein Phasenunterschied und der rücklaufende Lichtstrahl ist ungestört.

Anders verhält es sich, wenn die beiden Teilspiegel auf unterschiedlichem Niveau liegen. In diesem Fall ergeben sich für die von den beiden Teilspiegeln 19.1, 19.2 reflektierten Teil-Lichtstrahlen unterschiedliche, optische Weglängen. Dies bedeutet, dass eine vom Niveau-Unterschied abhängige Phasendifferenz auftritt, die durch Interferenz den reflektierten Gesamt-Lichtstrahl mehr oder weniger abschwächt und damit moduliert. Hierbei kommt es nicht auf irgendeine absolute Länge an, sondern auf den genannten relativen Niveau-Unterschied und die hierdurch bewirkte Phasendifferenz. Hiermit entfallen alle Störeinflüsse der Umgebung weitgehend. Temperaturschwankungen beispielsweise spielen für die Modulationstiefe keine Rolle.

Allgemein gilt, dass die Phasendifferenz durch eine Relativ-Bewegung der beiden Teilspiegel 19.1, 19.2 zustande kommt. Die Relativ-Bewegung ist erreichbar, indem der eine Teilspiegel, z.B. 19.1 starr befestigt ist und der andere Teilspiegel 19.2 orthogonal zu seiner Spiegelfläche verschoben wird. Die Richtung vor oder zurück der Verschiebung spielt dabei keine Rolle. Es können jedoch auch beide Teilspiegel gleichzeitig verschoben werden, z.B. ungleichmässig stark in die gleiche Richtung oder bevorzugt gleich stark gegensinnig. Im letzteren Fall genügt für jeden Teilspiegel 19.1, 19.2 eine Verschiebung um eine achtel Wellenlänge des Lichts, um von maximaler Helligkeit auf minimale Helligkeit bzw. maximale Auslöschung durchzumodulieren bzw. digital umzuschalten. Dies bedeutet bei einer üblichen Wellenlänge von z.B. 3100 nm eine Auslenkung der Teilspiegel 19.1, 19.2 um jeweils nur etwa 400 nm.

Jeder Teilspiegel 19.1, 19.2 sollte - wie bereits erwähnt - die Hälfte des ankommenden bzw. abgehenden Lichts reflektieren. Ist dies nicht exakt der Fall, dann ergibt sich eine reduzierte Modulationstiefe. Hierbei besteht jedoch keine Abhängigkeit von der Spiegelform. Es ist daher möglich, statt der in Fig. 1 gezeigten planen Teilspiegel 19.1, 19.2 mit linearer Trennungslinie 20 die Fläche des einen Teilspiegels kreisförmig auszubilden und diesen Teilspiegel im Kreisausschnitt des zweiten Teilspiegels anzuordnen.

Fig. 2 zeigt eine stark vergrösserte Detailansicht der Teilspiegel 19.1, 19.2. In dieser bevorzugten Ausführungsart bilden die Teilspiegel zwei nebeneinander angeordnete, gespannte Folien. Die Spannung der Teilspiegel entsteht unter dem Einfluss von variierbaren elektrostatischen Kräften zwischen den an zwei Seiten befestigten Folien und einer benachbarten Steuerplatte mit zwei Steuerelektroden. Beim Anlegen einer elektrischen Spannung zwischen einer Leitschicht der Teilspiegel 19.1, 19.2, insbesondere der aufgedampften, metallischen Spiegelschicht, und den Steuerelektroden, verbiegen sich die Teilspiegel 19.1, 19.2 bogenförmig. Es ist nun vorteilhaft, durch eine konstante, gemeinsame, elektrische Vorspannung die beiden Teilspiegel in gleicher Weise mechanisch vorzuspannen. Hiermit wird eine stabile Grundstellung der Teilspiegel 19.1, 19.2 erreicht, von der aus sich die Teilspiegel gegensinnig auslenken lassen. Hierzu ist z.B. eine gemeinsame Steuerspannung für die beiden Teilspiegel 19.1, 19.2 gegensinnig der elektrischen Vorspannung zu überlagern. Hierbei sind - wie erwähnt - nur sehr geringe mechanische Auslenkungen in die eine bzw. in die andere Richtung für eine digitale Umsteuerung "hell/dunkel" erforderlich.

Die Forderung nach planen Teilspiegeln 19.1, 19.2 ist bei der Version entsprechend Fig. 2 nicht vollständig gegeben. Die Teilspiegel dieser Ausführungsform sind vielmehr - wie beschrieben - leicht bogenförmig ausgebildet. Wird keine optische Korrektur vorgenommen, dann hat dies natürlich gewisse Einflüsse auf das Interferenzverhalten zwischen den beiden reflektierten Teil-Lichtstrahlen. Diese Einflüsse wirken jedoch nicht in grundsätzlicher Art. Das Gesamtverhalten des Modulators 11 bleibt vielmehr voll erhalten.

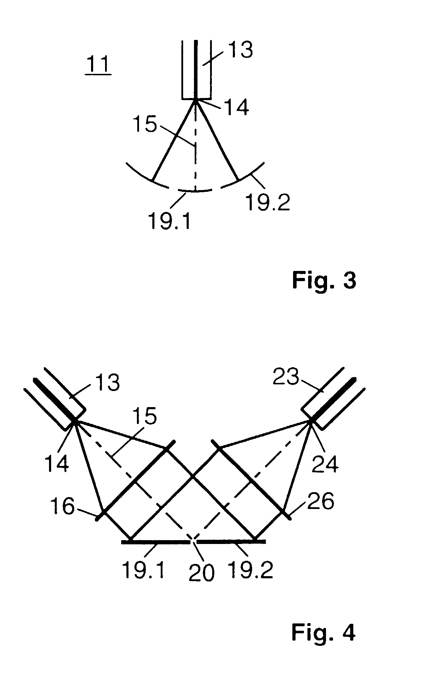

Fig. 3 zeigt den Schnitt durch einen weiteren Modulator 11. Bei diesem sind die Teilspiegel 19.1, 19.2 in bewusster Abweichung vom Planspiegel konkav gebogen. Der zentrisch zur durch die Lichtleitfaser 13 gegebenen optischen Achse 15 angeordnete innere Teilspiegel 19.1 bildet eine Kugelkalotte. Der zweite Teilspiegel 19.2 besitzt eine kreisförmige Ausnehmung, in der der erste Teilspiegel 19.1 angeordnet ist. Beide Teilspiegel 19.1, 19.2 ergänzen einander zu einer grösseren Kugelkalotte. Der Mittelpunkt dieser Kugelkalotte liegt in der Lichtaustrittstelle 14 der Lichtleitfaser 13. Hierdurch kann eine Sammellinse 16 entsprechend Fig. 1 entfallen, da das gesamte Licht unabhängig von seinem Raumaustrittswinkel stets zur Lichtaustrittstelle 14 der Faser 13 zurückreflektiert wird.

Als Antrieb für die Linearbewegung des einen oder der beiden Teilspiegel(s) 19.1, 19.2 von Fig. 3 können beispielsweise elektrisch beeinflussbare Festkörperelemente dienen, die den bzw. die Teilspiegel tragen. Solche Festkörperelemente sind vor allem piezoelektrische Wandler, z.B. Quarze.

Es ist jedoch auch möglich, die Teilspiegel 19.1, 19.2 von Fig. 3 ähnlich wie diejenigen von Fig. 2 als Membranen auszubilden und durch elektrostatische Kräfte gegenüber einem Träger 22 auszulenken. Derartige Membranen lassen sich durch gezieltes Ätzen von dotierten Halbleitern, z.B. Silizium-Einkristall-Scheiben mit geeigneten pn-Dotierungsschichten, relativ problemlos herstellen. Durch Aufdampfen metallischer Schichten lassen sich sodann sowohl die Spiegeleigenschaften als auch Elektroden zum Anlegen der elektrostatischen Spannungen erzeugen, die die Auslenkung der Teilspiegel 19.1, 19.2 bewirken. Es ist damit preiswert möglich, sehr kleine und kompakte Modulatoren 11 herzustellen, die bis in den MHz-Bereich zuverlässig arbeiten. Die Ansteuerung solcher Modulatoren 11 erfordert nur relativ niedrige Spannungen und kaum Strom.

Fig. 4 zeigt ald Alternative zur Erfindung einen dritten Modulator 11. Bei diesem trifft der durch die Sammellinse 16 parallelisierte, ankommende Lichtstrahl nicht entsprechend Fig. 1 orthogonal auf die beiden Teilspiegel 19.1, 19.2 auf, sondern schräg unter einem weitgehend frei wählbaren Winkel. Bei diesem dritten Modulator 11 ist eine zweite Sammellinse 26 erforderlich, die die reflektierten Teilstrahlen fokussiert und der Eintrittstelle 24 einer zweiten, abgehenden Lichtleitfaser 23 zuführt. Mit diesem Modulator ist das Modulieren eines durchgehenden Lichtstrahls möglich, wobei die Durchgangsrichtung keine Rolle spielt.

Neben den beschriebenen gibt es eine ganze Reihe weiterer Varianten, von denen nachfolgend einige erwähnt seien:
- Die Sammellinsen 16 und 26 können durch andere optische Mittel ersetzt sein, die die gleiche Wirkung haben, z.B. durch Linsensätze oder sphärische Spiegel.
- Der anhand von Fig. 3 beschriebene Modulator 11 kann in einer Alternative zur Erfindung so abgeändert werden, dass statt des Zurückreflektierens in die eine Lichtleitfaser 13 das reflektierte Licht einer zweiten Lichtleitfaser 23 zugeführt wird. In diesem Fall ergibt sich eine zweite Anordnung zum Modulieren eines durchgehenden Lichtstrahls.
- Es ist vorteilhaft, die beiden Teilspiegel 19.1, 19.2 in einer gemeinsamen Ebene anzuordnen. Es ist jedoch auch möglich, erheblich unterschiedliche Ebenen vorzusehen.

Zum Schluss sei noch erwähnt, dass die Art der beschriebenen Modulation in jedem Fall eine Modulation der Lichtintensität bzw. der Lichtstärke eines in einer Optikfaser geführten Lichtstrahls darstellt. Diese Modulation kann spezieller auch als Amplitudenmodulation angesehen und z.B. für Zwecke der Informationsübertragung verwendet werden. Die Tiefe der Modulation hängt dabei davon ab, wieviel Licht die beiden Teilspiegel 19.1, 19.2 relativ zum Interferenzprozess beisteuern. Sind die beiden interferierenden Lichtstärken gleich gross, dann ergibt sich eine maximale Modulationstiefe. Sind die beiden interferierenden Lichtstärken dagegen ungleich gross, dann ergibt sich eine deutlich geringere Modulationstiefe. Wichtig ist auf alle Fälle, dass jeder der beiden Teilspiegel 19.1, 19.2 einen wesentlichen Teil des aus der Lichtleitfaser 13 austretenden, gesamten Lichts reflektiert und anschliessend zur Interferenz bringt.

## Patentansprüche

1. Modulator (11) zum Modulieren der Intensität eines freien Lichtstrahls, der aus einer Lichtleitfaser (13) austritt und in eine solche wieder eintritt,
- mit einem Spiegel aus zwei Teilspiegeln (19.1, 19.2),
- mit Mitteln zum Aufteilen des freien Lichtstrahls zu etwa gleichen Teilen auf die beiden Teilspiegel (19.1, 19.2), und
- mit einem Antrieb zum gesteuerten, elektromechanischen Bewegen der beiden Teilspiegel (19.1, 19.2) relativ gegeneinander zum Erzeugen zweier unterschiedlich langer, optischer Wege,
dadurch gekennzeichnet,
- dass eine einzige Lichtleitfaser (13) vorgesehen ist, aus der der freie Lichtstrahl austritt und in die dieser auch wieder eintritt,
- dass die Mittel zum Aufteilen des freien Lichtstrahls so ausgebildet sind, dass dieser beim Auftreffen auf die Teilspiegel (19.1, 192.) relativ breitflächig aufgefächert ist und
- dass die Teilspiegel (19.1, 19.2) so ausgebildet und angeordnet sind, dass das gesamte auftreffende Licht jeweils in sich selbst zurückreflektiert wird.

2. Modulator nach Anspruch 1,
dadurch gekennzeichnet,
- dass die Stirnseite der Lichtleitfaser (13) orthogonal zur Längsrichtung der Faser plangeschliffen ist,
- dass die beiden Teilspiegel (19.1, 19.2) im wesentlichen eben sind,
- dass zwischen der Lichtleitfaser (13) und den Teilspiegeln (19.1, 19.2) optische Mittel zum Parallelisieren des aus der Lichtleitfaser (13) austretenden, divergierenden Lichtstrahls eingefügt sind,
- dass der eine Brennpunkt dieser optischen Mittel in der Lichtaustrittstelle (14) der Lichtleitfaser (13) liegt, und
- dass das parallelisierte Licht im wesentlichen orthogonal auf die Spiegel (19.1, 19.2) auffällt.

3. Modulator nach Anspruch 2,
dadurch gekennzeichnet,
dass die optischen Mittel als Sammellinse (16) ausgebildet sind.

4. Modulator nach Anspruch 2,
dadurch gekennzeichnet,
- dass die Stirnseite der Lichtleitfaser (13) orthogonal zur Längsrichtung der Faser plangeschliffen ist,
- dass der eine Teilspiegel (19.1) in einer kreisförmigen Ausnehmung des zweiten Teilspiegels (19.2) angeordnet ist,
- dass beide Teilspiegel (19.1, 19.2) konkav ausgebildet sind, derart, dass sie zusammen im wesentlichen eine Kugelkalotte bilden, wobei die Kalottenachse beiden Teilspiegeln (19.1, 19.2) gemeinsam ist, und
- dass der Mittelpunkt der Kugelkalotte in der Lichtaustrittstelle (14) der Lichtleitfaser (13) liegt.

5. Modulator nach Anspruch 1,
dadurch gekennzeichnet,
- dass die Teilspiegel (19.1, 19.2) als metallisch beschichtete Membranen ausgebildet sind,
- dass den Membranen wenigstens ein Träger (22) zugeordnet ist, und
- dass zwischen die Membranen und die Träger (22) elektrische Steuerspannungen anlegbar sind.

## Claims

1. Modulator (11) for modulating the intensity of a free light beam which exits and reenters an optical fibre (13), comprising
- a mirror composed of two partial mirrors (19.1, 19.2),
- means allowing to direct approximately equal parts of the free light beam onto the two partial mirrors (19.1, 19.2), and
- a drive for the controlled electromechanical movement of the two partial mirrors (19.1, 19.2) relative to each other in order to produce two optical paths of different lengths,
characterised in that
- a single optical fibre (13) is provided from which the free light beam exits and into which it reenters,
- the means for dividing the free light beams are so designed that the latter is spread on a relatively large surface when impinging on the partial mirrors (19.1, 19.2) and
- the partial mirrors (19.1, 19.2) are so designed and positioned that all of the impinging light is reflected onto itself.

2. Modulator according to claim 1,
characterised in that
- the front surface of the optical fibre (13) is surface-ground orthogonally to the longitudinal direction of the fibre,
- the two partial mirrors (19.1, 19.2) are essentially plane,
- optical means for collimating the divergent light beam emerging from the optical fibre (13) are interposed between the optical fibre (13) and the partial mirrors (19.1, 19.2),
- one of the focal points of these optical means is located at the light exit point (14) of the optical fibre, and in that
- the collimated light impinges on the mirrors (19.1, 19.2) essentially orthogonally.

3. Modulator according to claim 2,
characterised in that
the optical means are in the form of a focusing lens (16).

4. Modulator according to claim 2,
characterised in that
- the front surface of the optical fibre (13) is surface-ground orthogonally to the longitudinal direction of the fibre,
- one of the partial mirrors (19.1) is disposed in a circular recess of the second partial mirror (19.2),
- both partial mirrors are concave in such a manner that together they essentially form a spherical section whose section axis is common to both mirrors, and in that
- the centre of the spherical section is located at the light exit point (14) of the optical fibre (13).

5. Modulator according to claim 1,
characterised in that
- the partial mirrors (19.1, 19.2) are in the form of vacuum-evaporated diaphragms,
- at least one support (22) is associated to the diaphragms, and in that
- electric control voltages are applicable between the diaphragms and the supports (22).

## Revendications

1. Modulateur (11) pour la modulation de l'intensité d'un rayon lumineux libre émergeant d'une fibre optique (13) et rentrant dans une telle fibre, comprenant
- un miroir composé de deux miroirs partiels (19.1, 19.2)
- des moyens pour répartir à parties approximativement égales le rayon lumineux libre sur les deux miroirs partiels (19.1, 19.2), et
- un entraînement permettant un mouvement relatif, commandé par voie électromécanique, des deux miroirs partiels (19.1, 19.2) afin d'obtenir deux chemins optiques de longueurs différentes,
caractérisé en ce que
- une fibre optique unique (13) est prévue de laquelle le rayon lumineux libre émerge et dans laquelle il est également renvoyé,
- les moyens de répartition du rayon lumineux libre sont réalisés de telle manière que ce dernier est dispersé sur une surface relativement large, et que
- les miroirs partiels (19.1, 19.2) sont réalisés et disposés de telle manière que la totalité de la lumière incidente est réfléchie dans elle-même.

2. Modulateur selon la revendication 1,
caractérisé en ce que
- la face frontale de la fibre optique (13) est rectifiée perpendiculairement à la direction longitudinale de la fibre,
- les deux miroirs partiels (19.1, 19.2) sont essentiellement plats,
- des moyens optiques pour collimater le rayon lumineux divergent qui émerge de la fibre optique (13) sont interposés entre la fibre optique (13) et les miroirs partiels (19.1, 19.2),
- l'un des foyers desdits moyens optiques coïncide avec le point d'émergence (14) de la lumière de la fibre optique (13), et que
- la lumière collimatée tombe essentiellement perpendiculairement sur les miroirs (19.1, 19.2).

3. Modulateur selon la revendication 2,
caractérisé en ce que
lesdits moyens optiques sont réalisés sous forme d'une lentille convexe (16).

4. Modulateur selon la revendication 2,
caractérisé en ce que
- la face frontale de la fibre optique (13) est rectifiée perpendiculairement à la direction longitudinale de la fibre,
- l'un des miroirs partiels (19.1) est disposé dans un évidement circulaire du deuxième miroir partiel (19.2),
- les deux miroirs partiels (19.1, 19.2) présentent une configuration concave telle qu'ils forment ensemble une calotte sphérique essentiellement, l'axe de ladite calotte étant commune aux deux miroirs partiels (19.1, 19.2), et que
- le centre de la calotte sphérique coïncide avec le point d'émergence (14) de la lumière de la fibre optique (13).

5. Modulateur selon la revendication 1,
caractérisé en ce que
- les miroirs partiels sont réalisés sous forme de membranes revêtues d'une couche métallique,
- au moins un support (22) est associé auxdites membranes, et que
- des tensions électriques de commande sont applicables entre les membranes et les supports (22).
